(19) Europäisches Patentamt
European Patent Office
Office européen des brevets

(11) Veröffentlichungsnummer : **0 012 194**
**B1**

# (12) EUROPÄISCHE PATENTSCHRIFT

(45) Veröffentlichungstag der Patentschrift : **03.02.82**

(51) Int. Cl.³ : **C 07 F 9/38**

(21) Anmeldenummer : **79104159.3**

(22) Anmeldetag : **26.10.79**

## (54) Verfahren zur Herstellung von N-Carboxyalkyl-1-aminoalkan-diphosphonsäuren und Carboxyalkylamino-phenyl-methan-diphosphonsäuren.

(30) Priorität : **27.10.78 DE 2846835**

(43) Veröffentlichungstag der Anmeldung : **25.06.80 (Patentblatt 80/13)**

(45) Bekanntmachung des Hinweises auf die Patenterteilung : **03.02.82 Patentblatt 82/05**

(84) Benannte Vertragsstaaten :
**AT BE CH DE FR GB IT LU NL SE**

(56) Entgegenhaltungen :
**DE - A1 - 2 722 539**
**DE - B2 - 1 958 124**
**DE - B2 - 1 958 123**
**DE - B - 2 203 340**

(73) Patentinhaber : **Benckiser-Knapsack GmbH**
**Dr. Albert-Reimann-Strasse 2**
**D-6802 Ladenburg (DE)**

(72) Erfinder : **Sommer, Klaus, Dr.**
**Sandwingert 39**
**D-6900 Heidelberg 1 (DE)**
Erfinder : **Walter, Edgar**
**Gerhard Hauptmann Strasse 28**
**D-6800 Mannheim (DE)**

(74) Vertreter : **Zellentin, Rüdiger, Dr. et al**
**Zweibrückenstrasse 15**
**D-8000 München 2 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

EP 0 012 194 B1

Verfahren zur Herstellung von N-Carboxyalkyl-1-aminoalkan-diphosphonsäuren und Carboxyalkylamino-phenyl-methan-diphosphonsäuren

Die vorliegende Erfindung betrifft ein Verfahren zur Herstellung von N-Carboxyalkyl-aminoalkandiphosphonsäuren und Carboxyalkylamino-phenyl-methan-diphosphonsäuren der allgemeinen Formeln

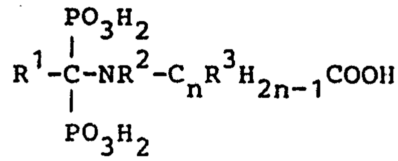

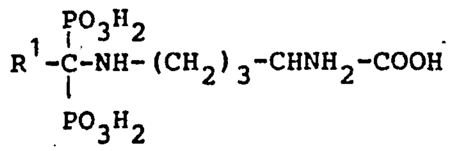 und 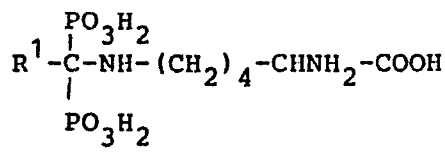

in denen

$R^1$ = H, $CH_3$, $C_2H_5$, $C_6H_5$, c—$C_6H_{11}$, HOOC $C_mH_{2m}$ (m = 2—5) $ClCH_2$, $C_6H_5$—$CH_2$,
$R^2$ = H, $CH_3$, $C_2H_5$, $CH_2COOH$, $C_2H_4COOH$
$R^3$ = H, $CH_3$, $C_2H_5$, —$CH_2C_6H_5$, —$C_2H_4SCH_3$, —$CH_2COOH$, —$C_2H_4COOH$,

oder

$R^2+R^3$ = 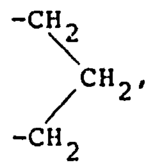

oder

$R^1 + R^2$ = —$C_mH_{2m}CO$—(m = 2—5)

und

n = 1—4 bedeuten,

N-Carboxymethyl-1-aminoalkan-phosphonsäuren und Carboxymethyl-aminoarylalkan-phosphonsäuren sind bereits aus der DE-PS 23 18 416 bekannt. Man erhält die Alkalisalze dieser Phosphonsäuren durch Umsetzen von Aminoalkanphosphonsäuren bzw. Aminoarylalkan-phosphonsäuren mit Formaldehyd und Alkalicyanid in alkalischem Medium. Ein Nachteil dieses Verfahrens ist, daß beim Arbeiten mit Alkalicyaniden umfangreiche Sicherheitsvorkehrungen erforderlich sind. Außerdem beschränkt sich diese Methode auf die Herstellung von Carboxymethyl-Derivaten, während höhere Homologe auf diese Weise nicht zugänglich sind.

Es wurde nun gefunden, daß die genannten carboxylierten Diphosphonsäuren in einfacher Weise herzustellen sind, wenn man N-Acyl-aminocarbonsäuren oder deren Anhydride der allgemeinen Formeln

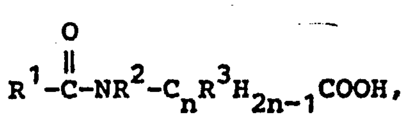

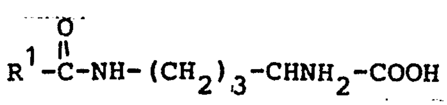 oder 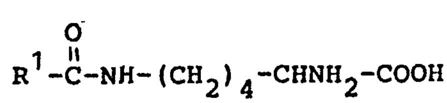

in denen

$R^1$, $R^2$, $R^3$ und n die gleiche Bedeutung wie oben haben, mit pyrophosphoriger Säure oder phosphoriger Säure und Phosphortrichlorid im Molverhältnis von 5 : 1 bis 1 : 2 bei Temperaturen zwischen 50 °C und 100 °C zur Reaktion bringt.

Bei der Umsetzung bilden sich Anhydrid-Derivate der N-Carboxyalkyl-aminoalkan-phosphonsäuren, die auf einfache Weise zu den freien Carboxy-phosphonsäuren hydrolysiert werden können.

Anstelle der pyrophosphorigen Säure kann man auch phosphorige Säure und Phosphortrichlorid in einem Molverhältnis, wie es zur Bildung von pyrophosphoriger Säure erforderlich ist, einsetzen.

Diese Reaktionsweise ist um so überraschender, als einerseits bekannt war, daß Carbonsäuren bzw. deren Anhydride sich bei der Reaktion mit phosphoriger Säure und Phosphortrichlorid leicht zu 1-Hydroxyalkan-1,1-diphosphonsäuren umsetzen, wie aus Z. anorg. allg. Chem. 381, 247 (1971) hervorgeht, was auch für die β-Aminopropionsäure gilt (DE-AS 21 30 794). Andererseits erleiden Aminoessigsäure und Iminodiessigsäure unter ähnlichen Reaktionsbedingungen Zersetzung, so daß die entsprechenden Phosphonsäuren nur in geringen Mengen gebildet werden. Im Falle der N-Acyl-aminocarbonsäuren erfolgt jedoch die Phosphonylierung an der Amid-Gruppe und nicht — wie zu erwarten war — an der Carbonsäure-Gruppe.

Erfindungsgemäß wird so verfahren, daß man entweder die Anhydride der N-Acyl-aminocarbonsäure mit pyrophosphoriger Säure oder die N-Acyl-aminocarbonsäure selbst mit phosphoriger Säure und $PCl_3$ im entsprechenden Molverhältnis mit oder ohne Lösungsmittel bei Temperaturen zwischen 50 und 100 °C zur Reaktion bringt, wobei man pro Acylamino-Gruppe 1 Mol pyrophosphorige Säure einsetzt.

Da man pyrophosphorige Säure ohnehin aus Phosphortrichlorid und phosphoriger Säure erhält, kann man auch die wasserentziehende Wirkung des $PCl_3$ zur Bildung der Anhydride der N-Acyl-aminocarbonsäuren während der Umsetzung nutzen. Es ist also nicht unbedingt erforderlich, von den Anhydriden der N-Acyl-aminocarbonsäuren auszugehen. Man kann in Vereinfachung des Verfahrens auch N-Acyl-aminocarbonsäuren direkt mit einer Mischung aus phosphoriger Säure und Phosphortrichlorid umsetzen, wobei man jedoch einen höheren Phosphortrichlorid-Anteil als er zur Gewinnung von pyrophosphoriger Säure notwendig ist, wählen muß. Vorteilhaft setzt man die 1,5- bis 2-fache Menge ein.

N-Acyl-aminocarbonsäuren sind leicht zugängliche Verbindungen, die man aus Aminocarbonsäuren durch Umsetzung mit Carbonsäure-Anhydriden erhält. N-Acetylaminosäuren können auch durch Addition von Keten an Aminosäuren gewonnen werden. Zur Darstellung der N-Formylderivate bedient man sich der Umsetzung von Aminocarbonsäuren mit Ameisensäure in Gegenwart von Acetanhydrid. Benzoyl-Abkömmlinge, z.B. Hippur- oder Ornithur-Säure gewinnt man mittels Schotten-Baumann-Reaktion aus Aminocarbonsäure und Benzoylchlorid.

Acyl-aminocarbonsäuren, die sich besonders zur Umsetzung mit phosphoriger Säure und Phosphortrichlorid bzw. pyrophosphoriger Säure eignen, leiten sich von den nachstehend ausgeführten Aminosäuren ab : Glycin, Sarkosin, Phenylglycin, α- und γ-Alanin, Phenylalanin, α- und γ-Aminobuttersäure, Lysin, Ornithin, Methionin, Prolin, Iminodiessigsäure, Iminodipropionsäure, Asparaginsäure und Glutaminsäure.

N-Acyl-aminocarbonsäuren bzw. deren Anhydride, die zur Reaktion verwendet werden, enthalten bevorzugt als Acyl-Gruppe : Formyl-, Acetyl-, Chloracetyl-, Phenylacetyl-, Propionyl-, β-Carboxypropionyl-, Cyclohexacarbonyl- und Benzoyl-Reste.

Die nach dem vorliegenden Verfahren erhaltenen N-Carboxyalkylamino-alkandiphosphonsäuren bzw. Carboxyalkylamino-phenyl-methan-diphosphonsäuren und ihre Alkalisalze, die man durch Neutralisation der freien Säure mit Alkalilauge erhält, sind sehr gut wasserlöslich. Ihre Löslichkeit ist wesentlich höher, als die der Aminophosphonsäuren, von denen sie sich ableiten. Sie zeichnen sich als gute Komplexbildner für polyvalente Metallkationen, wie Calcium, Magnesium, Eisen, Kupfer, Mangan usw. aus. Da sie auch bei Temperaturen über 100 °C hydrolysebeständig sind, können sie auch dort mit Vorteil eingesetzt werden, wo man aufgrund der Hydrolyse auf Polyphosphate verzichten muß.

## Beispiel 1

58,3 g N-Acetylglycin werden in 250 ml Dimethyldiglykoläther aufgeschlämmt, 62 g phosphorige Säure zugegeben und unter kräftigem Rühren 45 ml Phosphortrichlorid zugetropft. Nach der Zugabe des Phosphortrichlorids erwärmt man auf 70 bis 80 °C und hält 3 Stunden unter Rühren bei dieser Temperatur. Anschließend tropft man 150 ml $H_2O$ zu und kocht 15 Minuten. Im Wasserstrahlvakuum wird zur Trockne eingedampft, mit 50 ml Wasser aufgenommen und mit 200 ml Isopropanol versetzt. Hierbei scheidet sich ein weißer Niederschlag ab, der in der Hauptsache aus N-Carboxymethyl-aminoäthan-diphosphonsäure besteht. Ausbeute 119,5 g.

Zur Reinigung wird ein Teil des Niederschlages in Wasser gelöst, mit einem stark sauren Kationenaustauscher behandelt, die Lösung eingeengt und die Säure mit i-Propanol gefällt.

| | | | | |
|---|---|---|---|---|
| Analyse : | gef. : | C 18,6 %, | N 5,4 %, | P 23,9 % |
| | ber. : | C 18,25 %, | N 5,32 %, | P 23,55 %. |

## Beispiel 2

Zu einer Mischung aus 70 g N-Acetylglycin und 70 g phosphoriger Säure tropft man unter langsamen Rühren der Mischung 55 ml Phosphortrichlorid. Die Mischung wird allmählich auf 75 °C erwärmt und 3 bis 4 Stunden bei dieser Temperatur belassen. Nach Abkühlen gibt man 120 ml Wasser zu, kocht kurze Zeit auf und dampft im Vakuum der Wasserstrahlpumpe ein. Man erhält 140 g eines leicht gelb gefärbten Rückstandes. Dieser Rückstand enthält in der Hauptsache N-Carboxymethyl-aminoäthan-1,1-diphosphonsäure neben wenig 2-Amino-1-hydroxyäthan-1,1-diphosphonsäure.

| | | | | |
|---|---|---|---|---|
| Analyse : | gef. : | C 18,4 %, | N 5,9 %, | P 24,2 % |
| | ber. : | C 18,25 %, | N 5,32 %, | P 23,55 %. |

Beispiel 3

29,5 g Glutaminsäure werden unter Rühren allmählich in 60 ml Acetanhydrid, das noch 0,4 g p-Toluolsulfonsäure enthält, eingetragen und anschließend 1 Stunde bei 100 bis 110 °C gehalten. Entstandene Essigsäure und überschüssiges Acetanhydrid werden im Vakuum der Wasserstrahlpumpe abdestilliert. Das als Rückstand erhaltene viskose Öl löst man in 50 ml Dimethyldiglykoläther, fügt 80 g Phosphortrichlorid zu und tropft unter kräftigem Rühren eine Lösung von 20 g phosphoriger Säure in 30 ml Dimethyldiglykoläther zu. Unter weiterem Rühren steigert man die Temperatur auf 90 bis 95 °C und hält 3 bis 4 Stunden bei dieser Temperatur. Anschließend wird mit 50 ml Wasser 30 Minuten erhitzt, das Lösungsmittel im Vakuum abdestilliert und das Reaktionsprodukt durch Aufnehmen in Alkohol gefällt. Der Niederschlag enthält im wesentlichen N-(1,3-Dicarboxy-propyl)-1-aminoäthan-1,1-diphosphonsäure.

Beispiel 4

Zu 32 g phosphoriger Säure gibt man unter Feuchtigkeitsausschluß 35 ml Phosphortrichlorid und 52 g N-Acetyl-3-aminopropionsäure, vermischt mit Hilfe eines langsam drehenden Rührers die Komponenten und erhitzt 4 Stunden auf 80 °C. Anschließend werden 100 ml Wasser zugegeben, 1 bis 2 Stunden unter Rückfluß gekocht und die N-Carboxyäthyl-1-aminoäthan-1,1-diphosphonsäure, die geringfügig mit β-Alanin verunreinigt ist, ausgefällt und getrocknet. Ausbeute 76 g.

Beispiel 5

40 g Hippursäure werden mit 18 g phosphoriger Säure und 25 ml $PCl_3$ in 150 ml Tetramethylensulfon gelöst und 3 bis 4 Stunden bei 80 °C gehalten. Anschließend gibt man 50 ml $H_2O$ zu und erhitzt erneut 1 Stunde auf 100 bis 110 °C. Im Vakuum wird größtenteils vom Wasser befreit, wobei ein Teil der N-Carboxymethyl-phenyl-aminomethan-diphosphonsäure ausfällt. Durch Zugabe von Isopropanol wird die Fällung vervollständigt. Man filtriert den Niederschlag ab und wäscht einige Male mit Isopropanol, um das Kristallisat von anhaftendem Sulfon zu befreien. Ausbeute 56 g.

Analyse : gef. : C 32,6 %, N 4,1 %, P 18,8 %
ber. : C 33,23 %, N 4,31 %, P 19,05 %.

Beispiel 6

39,5 g Acetylsarkosin und 38 g phosphorige Säure werden in 150 ml Dimethyldiglykoläther aufgeschlämmt. Hierzu tropft man unter Rühren 38 ml $PCl_3$, wobei sich die Mischung leicht erwärmt. Man bringt auf 70 °C, hält 4 Stunden bei dieser Temperatur und hydrolysiert anschließend unter Zugabe von 50 ml Wasser. Nach Verdampfen des Lösungsmittels im Vakuum wird erneut mit 50 ml Wasser aufgenommen und mit 150 ml Äthanol versetzt. Der schwerlösliche Rückstand aus N-Methyl-N-carboxymethyl-1-aminoäthan-1,1-diphosphonsäure betrug nach Trocknen 73,5 g.

Analyse : gef. : C 22,0 %, N 5,4 %, P 22,9 %
ber. : C 21,65 %, N 5,06 %, P 22,36 %.

Aus 35,5 g N-Formylalanin wurden bei gleicher Verfahrensweise 69,2 g N-Carboxyäthyl-aminomethan-diphosphonsäure erhalten.

Beispiel 7

Zu einer Lösung von 40 g pyrophosphoriger Säure in 50 ml Tetramethylensulfon tropft man unter Rühren eine Lösung von 35 g N-Formyl-β-alanin-anhydrid in 100 ml Tetramethylensulfon und hält die Mischung 4 Stunden bei 90 °C. Nach Zugabe von 20 ml Wasser erhitzt man nochmals 1 Stunde auf 100 bis 110 °C, läßt abkühlen und versetzt zur Fällung der N-Carboxyäthyl-aminomethan-diphosphonsäure mit 200 ml Aceton.

Analyse : gef. : C 18,6 %, N 5,2 %, P 23,1 %
ber. : C 18,25 %, N 5,32 %, P 23,55 %.

**Ansprüche**

1. Verfahren zur Herstellung von N-Carboxyalkyl-1-aminoalkan-1,1-diphosphonsäuren und Carboxyalkylamino-phenylmethan-diphosphonsäuren der allgemeinen Formel

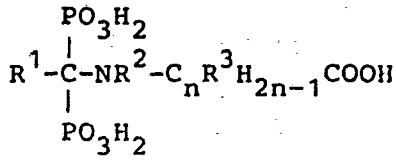

in der

$R^1$ = H, $CH_3$, $C_2H_5$, $C_6H_5$, c—$C_6H_{11}$, HOOC $C_mH_{2m}$ (m = 2—5), $ClCH_2$, $C_6H_5$—$CH_2$,
$R^2$ = H, $CH_3$, $C_2H_5$, $C_6H_5$, $CH_2COOH$, $C_2H_4COOH$
$R^3$ = H, $CH_3$, $C_2H_5$, —$CH_2C_6H_5$, —$C_2H_4SCH_3$, —$CH_2COOH$, —$C_2H_4COOH$,

oder

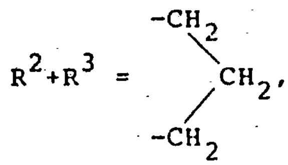

oder

$R^1 + R^2$ = —$C_mH_{2m}$CO—(m = 2—5),

und

n = 1—4

bedeuten, dadurch gekennzeichnet, daß man Acylaminocarbonsäuren oder deren Anhydride der allgemeinen Formel

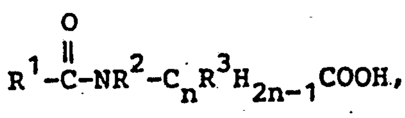

in der

$R^1$, $R^2$, $R^3$ und n die gleiche Bedeutung wie oben haben, mit pyrophosphoriger Säure oder phosphoriger Säure und Phosphortrichlorid im Molverhältnis von 5 : 1 bis 1 : 2 bei Temperaturen zwischen 50° und 100 °C zur Reaktion bringt.

2. Verfahren zur Herstellung von N-Carboxyalkyl-1-aminoalkan-1,1-diphosphonsäuren und Carboxyalkylamino-phenylmethan-diphosphonsäuren der Formeln

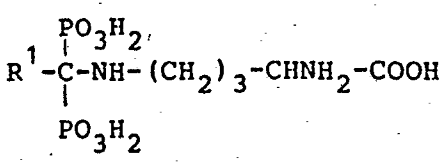

und

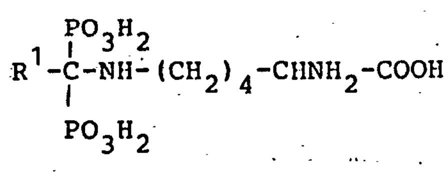

in denen

$R^1$ = H, $CH_3$, $C_2H_5$, $C_6H_5$, c—$C_6H_{11}$, HOOC—$C_mH_{2m}$ (m = 2—5), $ClCH_2$, $C_6H_5$—$CH_2$ ist, dadurch gekennzeichnet, daß man Acylaminolysin oder Acylamino-ornithin der Formeln

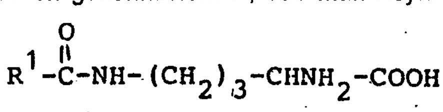

oder

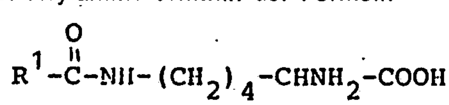

in denen

$R^1$ die gleichen Bedeutungen wie oben hat, mit pyrophosphoriger Säure oder phosphoriger Säure und Phosphortrichlorid im Molverhältnis von 5 : 1 bis 1 : 2 bei Temperaturen zwischen 50° und 100 °C zur Reaktion bringt.

3. Verfahren nach Anspruch 1 oder 2, dadurch gekennzeichnet, daß man die Anhydride der Acylaminocarbonsäuren während der Umsetzung mittels Phosphortrichlorid erzeugt und mit der hierbei gebildeten pyrophosphorigen Säure zur Reaktion bringt.

4. Verfahren nach einem der Ansprüche 1 bis 3, dadurch gekennzeichnet, daß man die Reaktion in polaren, aprotischen Lösungsmitteln durchführt.

**Claims**

1. A method for preparing N-carboxyalkyl-1-aminoalkane-1,1-diphosphonic acids and carboxyalkylamino-phenylmethane-diphosphonic acids of the general formula :

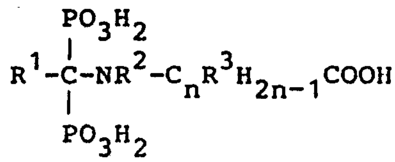

in which

$R^1$ = H, $CH_3$, $C_2H_5$, $C_6H_5$, c—$C_6H_{11}$, HOOC $C_mH_{2m}$ (m = 2—5), $ClCH_2$, $C_6H_5$—$CH_2$,
$R^2$ = H, $CH_3$, $C_2H_5$, $C_6H_5$, $CH_2COOH$, $C_2H_4COOH$
$R^3$ = H, $CH_3$, $C_2H_5$, —$CH_2C_6H_5$, —$C_2H_4SCH_3$, —$CH_2COOH$, —$C_2H_4COOH$,

or

$R^2+R^3$ = 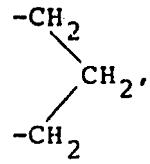

or

$R^1$ + $R^2$ = —$C_mH_{2m}$CO—(m = 2—5),

and

n = 1—4

characterised in that acylaminocarboxylic acids or their anhydrides of the general formula

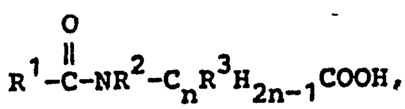

in which

$R^1$, $R^2$, $R^3$ and n have the same signification as above, are made to react with pyrophosphoric acid or phosphoric acid and phosphorus trichloride in the molar ratio of 5 : 1 to 1 : 2 at temperatures between 50° and 100 °C.

2. A method for preparing N-carboxyalkyl-1-aminoalkane-1,1-diphosphonic acids and carboxyalkylamino-phenylmethane-diphosphonic acids of the formulae

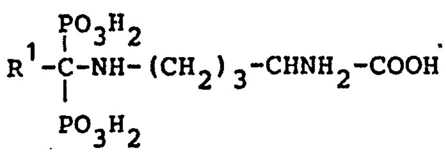 and 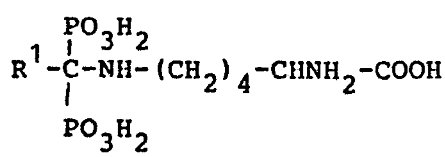

in which

$R^1$ = H, $CH_3$, $C_2H_5$, $C_6H_5$, c—$C_6H_{11}$, HOOC—$C_mH_{2m}$ (m = 2—5), $ClCH_2$, $C_6H_5$—$CH_2$,
characterised in that acylaminoolysine or acylaminoornithine of the formulae

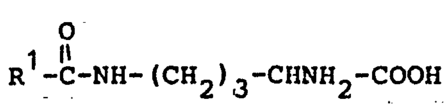 or 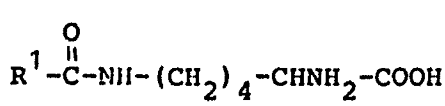

in which

$R^1$ has the same significations as above, is made to react with pyrophosphoric acid or phosphoric acid and phosphorus trichloride in the molar ratio of 5 : 1 to 1 : 2 at temperatures between 50° and 100 °C.

3. A method according to claim 1 or 2, characterised in that the anhydrides of the acyl-aminocarboxylic acids are produced during the conversion by means of phosphorus trichloride and made to react with the pyrophosphoric acid thus formed.

4. A method according to one of claims 1 to 3, characterised in that the reaction is carried out in polar, aprotic solvents.

**Revendications**

1. Procédé de préparation d'acides N-carboxyalkyl-1-aminoalcane-1,1-diphosphoniques et d'acides carboxy-alkylamino-phénylméthane-diphosphoniques de formule générale

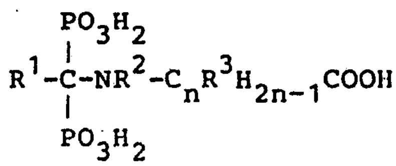

dans laquelle

$R^1$ = H, $CH_3$, $C_2H_5$, $C_6H_5$, c—$C_6H_{11}$, HOOC $C_mH_{2m}$ (m = 2—5), $ClCH_2$, $C_6H_5$—$CH_2$,

$R^2$ = H, $CH_3$, $C_2H_5$, $C_6H_5$, $CH_2COOH$, $C_2H_4COOH$

$R^3$ = H, $CH_3$, $C_2H_5$, —$CH_2C_6H_5$, —$C_2H_4SCH_3$, —$CH_2COOH$, —$C_2H_4COOH$,

ou bien

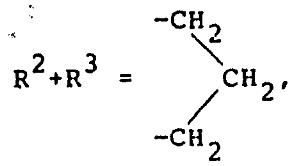

ou

$R^1 + R^2$ = —$C_mH_{2m}$CO—(m = 2—5),

et

n = 1—4

procédé caractérisé en ce que l'on fait réagir des acides acylaminocarboxyliques ou leurs anhydrides, de formule générale

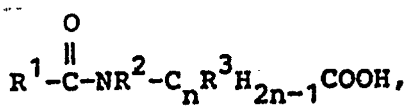

$R^1$, $R^2$, $R^3$ et n ayant les mêmes significations que ci-dessus, avec de l'acide pyrophosphoreux ou phosphoreux et du trichlorure de phosphore dans un rapport molaire compris entre 5 : 1 et 1 : 2, à des températures de 50 à 100 °C.

2. Procédé de préparation d'acides N-carboxy-alkyl-1-amino-alcane-1,1-diphosphoniques et d'acide carboxy-alkylamino-phénylméthane-diphosphonique de formules

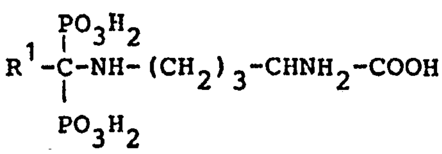 et 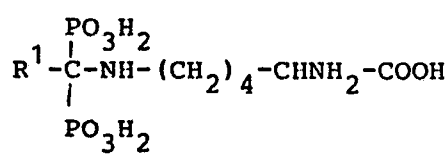

dans lesquelles

$R^1$ = H, $CH_3$, $C_2H_5$, $C_6H_5$, c—$C_6H_{11}$, HOOC—$C_mH_{2m}$ (m = 2—5), $ClCH_2$, $C_6H_5$—$CH_2$,

caractérisé en ce que l'on fait réagir une acylaminolysine ou une acylamino-ornithine, de formule

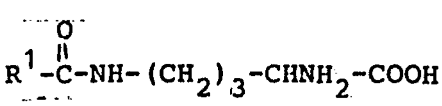 ou 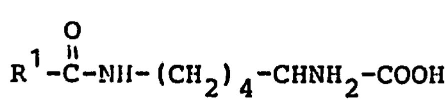

$R^1$ ayant les mêmes significations que ci-dessus, avec de l'acide pyrophosphoreux ou phosphoreux et du trichlorure de phosphore dans un rapport molaire compris entre 5 : 1 et 1 : 2, à des températures de 50 à 100 °C.

3. Procédé selon la revendication 1 ou 2, caractérisé en ce que l'on forme les anhydrides des acides acylaminocarboxyliques au cours de la réaction au moyen de trichlorure de phosphore, et on fait réagir avec l'acide pyrophosphoreux simultanément formé.

4. Procédé selon l'une quelconque des revendications 1 à 3, caractérisé en ce qu'on effectue la réaction dans des solvants polaires aprotiques.